# EUROPÄISCHE PATENTSCHRIFT

(11) **EP 3 802 212 B1**
(45) Veröffentlichungstag und Bekanntmachung des Hinweises auf die Patenterteilung: **20.07.2022**
(21) Anmeldenummer: 19729504.1
(22) Anmeldetag: 05.06.2019
(51) Int. Cl.: B60P 1/48, B60P 1/64

(54) **LADEARMANORDNUNG FÜR EIN WECHSELLADERFAHRZEUG ZUM LADEN VON ISO-CONTAINERN UND ZUM LADEN VON TRANSPORTBEHÄLTERN MIT EINEM HAKEN**
LOADING ARM ARRANGEMENT FOR A LOAD CHANGING VEHICLE FOR LOADING ISO CONTAINERS AND FOR LOADING TRANSPORT CONTAINERS HAVING A HOOK
ENSEMBLE BRAS DE CHARGEMENT CONÇU POUR UN VÉHICULE À SUPERSTRUCTURE INTERCHANGEABLE POUR PERMETTRE LE CHARGEMENT DE CONTENEURS ISO ET DE CONTENANTS DE TRANSPORT AVEC UN CROCHET

(30) Priorität: 06.06.2018 DE 102018113510
(43) Veröffentlichungstag der Anmeldung: 14.04.2021
(73) Patentinhaber: The Dynamic Engineering Solution Pty Ltd, Holden Hill, South Australia 5088 (AU)
(72) Erfinder: NEWSTEAD, Michael, Holden Hill, 5088, South Australia (AU); BROWNE, James, Holden Hill, 5088, South Australia (AU); FIORINOTTO, Oscar, Holden Hill, 5088, South Australia (AU)
(74) Vertreter: Kirschner, Sebastian
(86) Internationale Anmeldenummer: PCT/EP2019/064646
(87) Internationale Veröffentlichungsnummer: WO 2019/234097

(56) Entgegenhaltungen:
- EP-A1- 0 634 304
- EP-A2- 0 155 119
- GB-A- 2 298 856

## Beschreibung

Die Erfindung betrifft eine Ladearmanordnung für ein Wechselladerfahrzeug mit den Merkmalen des Patentanspruches 1.

Wechselladerfahrzeuge sind Lastkraftwagen, welche als Trägerfahrzeuge zum Transport spezieller Container konzipiert sind. Solche Wechselladerfahrzeuge werden auch als Abrollkipper oder Hakenabroller bezeichnet. Es existieren unterschiedliche Abrollbehälter, die von einem Wechselladerfahrzeug mit einer Ladearmanordnung aufgenommen werden können.

Zum einen existieren Abrollbehälter, die einen schräg nach oben weisenden Haken aufweisen. Um solche Transportbehälter wie beispielsweise Abrollpritschen auf das Wechselladerfahrzeug aufzuladen, weist die Ladearmanordnung einen entsprechenden Greifhaken auf, mit dem der Haken des Transportbehälters gegriffen werden kann, um so den Transportbehälter auf das Wechselladerfahrzeug zu ziehen.

Zum anderen existierten Ladearmanordnungen, die einen sogenannten ISO-Container aufnehmen können. Die entsprechende Norm für diese ISO-Container bildet die ISO-Norm 668. Diese ISO-Container weisen keinen entsprechenden Haken auf, sondern werden an den Ecken gegriffen. Dazu weist eine entsprechend ausgebildete Ladearmanordnung mindestens zwei Eckgreifer auf, wobei die Eckgreifer den ISO-Container an den Ecken greifen können.

Um nun mit einem Wechselladerfahrzeug Abrollbehälter von beiden Typen, d. h. mit Haken und Abrollbehälter in Form von ISO-Containern laden zu können, sind im Stand der Technik Adapterlösungen bekannt.

Aus der GB 2 298 856 A ist ein Wechselladerfahrzeug mit einer Ladearmanordnung bekannt. Die Ladearmanordnung weist einen Hauptarm auf, wobei der Hauptarm am Fahrzeugrahmen schwenkbar angeordnet ist. An dem Hauptarm ist wiederum ein gekröpft ausgebildeter Hilfsarm in Form eines Knickarms über ein Knickgelenk angeordnet. An dem freien Ende des Knickarms ist ein Greifhaken ausgebildet. An dem gekröpften Bereich des Knickarms kann nun ein Adapter mit vier Eckgreifern angebracht werden, um so auch ISO-Container auf- und abladen zu können. Der Adapter kann auf dem Wechselladerfahrzeug hinter der Fahrerkabine abgeladen werden, wenn er nicht gebraucht wird. Diese Ausgestaltung hat den Nachteil, dass, falls unterschiedliche Abrollbehälter geladen werden müssen, jedes Mal der Adapter angebracht oder wieder von dem Knickarm gelöst werden muss.

Ferner hat es sich herausgestellt, dass das Greifen von ISO-Containern mit vier Eckgreifern nicht immer möglich ist. Beispielsweise werden solche Wechselladerfahrzeuge auch in militärischen Anwendungen eingesetzt, wobei ISO-Container oder die Transportbehälter mit Haken nicht immer auf einem ebenen Untergrund, sondern im Gelände stehen. Hierbei besteht das Problem, dass die ISO-Container in einem weichen Untergrund einsinken können, und so die unteren Ecken des ISO-Containers nicht oder nur sehr schlecht erreichbar sind.

Ferner besteht bei solchen Einsätzen das Problem, dass der Bediener des Wechselladerfahrzeugs sich einer Gefahr aussetzten kann, wenn er das Fahrzeug verlässt. Daher ist es nicht immer möglich, einen Adapter zu verwenden.

Aus der EP 0 634 304 A1 ist ein Wechselladerfahrzeug mit einer Ladearmanordnung zum Laden von ISO-Containern bekannt. Die Ladearmanordnung ist dabei als Schiebehaken ausgebildet. Die Ladearmanordnung weist einen schwenkbar am Fahrzeugrahmen festgelegten Hauptarm auf, wobei ein gekröpft ausgebildeter Hilfsarm in Form eines Schiebehakenarms teleskopierbar am Hauptarm angeordnet ist. Der Hauptarm ist teleskopierbar. Der Schiebearm ist rechtwinklig zum Hauptarm an dessen freiem Ende ausgebildet, wobei der Schiebearm ebenfalls als Teleskoparm ausgebildet ist. An dem Ende des Schiebearms ist eine Traverse angeordnet, wobei am Ende der Traverse die Eckgreifer angeordnet sind. Die Eckgreifer sind dabei wiederum teleskopierbar an der Traverse angeordnet. Um den ISO-Container nun aufzuladen, wird das Wechselladerfahrzeug zunächst möglichst fluchtend zum Container positioniert. Hiernach kann durch Schwenken und Teleskopieren des Hauptarms, durch Teleskopieren des Schiebearms und durch Teleskopieren der Traverse mit den Greifern die Position der Eckgreifer relativ zu den oberen Ecken des Containers positioniert werden. Es ist nun nicht mehr erforderlich, dass die unteren Ecken des ISO-Containers gegriffen werden, sondern nur die oberen Ecken des ISO-Containers, welche besser erreichbar sind. Es hat sich herausgestellt, dass auch diese Ausgestaltung noch nicht optimal ausgebildet ist. Es ist weiterhin das Aufladen des ISO-Containers nur schwer möglich, wenn der ISO-Container auf weichem Untergrund steht und teilweise einsinkt, wobei beispielsweise der Container um seine Längsachse gekippt relativ zum Wechselladerfahrzeug steht oder das Wechselladerfahrzeug nicht genau fluchtend zum Container positionierbar ist.

Aus der EP 0 155 119 A2 ist ein Wechselladerfahrzeug mit einer Ladearmanordnung bekannt. Die Ladearmanordnung weist einen Hauptarm auf, wobei der Hauptarm am Fahrzeugrahmen schwenkbar angeordnet ist. An dem Hauptarm ist wiederum ein gekröpft ausgebildeter Hilfsarm über ein Gelenk schwenkbar angeordnet. An dem freien Ende des Hilfsarms ist ein Greifhaken ausgebildet.

Der Erfindung liegt daher die Aufgabe zugrunde, die gattungsbildende Ladearmanordnung und ein entsprechendes Wechselladerfahrzeug mit einer solchen Ladearmanordnung zu verbessern.

Diese der Erfindung zugrunde liegende Aufgabe wird nun durch eine Ladearmanordnung mit den Merkmalen des unabhängigen Patentanspruchs 1 gelöst. Demnach liegt bei einer Ladearmanordnung für ein Wechselladerfahrzeug mit einem Hauptarm und mit einem Hilfsarm, wobei die Ladearmanordnung zum Entladen und Beladen von ISO-Containern und zum Entladen und Beladen von Transportbehältern mit einem Haken ausgebildet ist. dann eine Lösung der erfindungsgemäßen Aufgabe vor, wenn an dem Hilfsarm teleskopierbar eine Traverse mit zwei Eckgreifern und ferner separat teleskopierbar ein Greifhaken angeordnet sind.

Der Hilfsarm weist vorzugsweise zwei Außenhülsen auf, wobei die Außenhülsen eine am Hauptarm befestigte Baueinheit bilden, wobei in der ersten Außenhülse ein erstes Innenteil mit der Traverse und den entsprechenden Eckgreifern zum Greifen von ISO-Containern und in der zweiten Außenhülse ein zweites Innenteil geführt ist, wobei an diesem zweiten Innenteil ein Greifhaken angeordnet ist. Die zweite Außenhülse und die zweite Innenhülse sind ebenfalls teleskopierbar. Diese Ausgestaltung hat den Vorteil, dass auf einen Adapter verzichtet werden kann. Sowohl Transportbehälter mit einem Haken als auch ISO-Container können mit dieser Ladearmanordnung vom Wechselladerfahrzeug entladen oder auf das Wechselladerfahrzeug beladen werden.

Die Traverse ist relativ zum Hilfsarm um zwei Achsen schwenkbar. Der Antrieb kann dabei motorisch, pneumatisch oder insbesondere hydraulisch erfolgen. Die Traverse ist zum einem um die Längsachse des Hilfsarms schwenkbar. Hierdurch kann ein Winkelversatz zwischen dem Wechselladerfahrzeug und dem Abrollbehälter ausgeglichen werden. Wenn der Abrollbehälter nicht genau fluchtend zum Wechselladerfahrzeug steht, sondern in einem leichten Winkelversatz, so kann die Traverse um die Längsachse des mit ihr verbundenen Armbereichs des Hilfsarms gedreht werden, wodurch die Eckgreifer sicher an den oberen Ecken des ISO-Containers angebracht werden können. Die Schwenkbarkeit kann beispielsweise mehr als 5 Grad, insbesondere mehr als 10 Grad betragen.

Ferner ist die Traverse um eine relativ zu der Traverse und dem mit ihr verbundenen Armbereich quer verlaufenden Achse, der sogenannten Querachse, schwenkbar, so dass auch Container sicher gegriffen werden können, die seitlich in den Untergrund eingesunken sind. Hierdurch steht der Container um seine Längsachse leicht gekippt. Diese Kipplage kann durch die Drehung der Traverse um die Querachse ausgeglichen werden.

Diese Ausgestaltung hat ferner den Vorteil, dass es durch die präzisere Einstellbarkeit der Position der Traverse mit den zwei Eckgreifern nicht mehr nötig ist, dass der Bediener die Fahrzeugkabine verlässt. Dies hat insbesondere bei militärischen Anwendungen Vorteile, da hierdurch der Bediener geschützt ist.

Das Wechselladerfahrzeug ist insbesondere als militärisches Fahrzeug ausgebildet. Es ist denkbar, dass die Fahrerkabine eine Panzerung aufweist.

Die Traverse und der mit ihr verbundene Armbereich des Hilfsarms sind T-förmig zueinanderstehend angeordnet. Ein Gelenk zwischen der Traverse und dem verbundenen Armbereich ist insbesondere als Kreuzgelenk ausgebildet. Das Kreuzgelenk weist ein Kreuzstück auf, wobei das Kreuzstück zwei rechtwinklig gekreuzte Achsstummelpaare aufweist. Das eine Achsstummelpaar zeigt dabei in der Grundstellung im Wesentlichen in Längsrichtung des Hilfsarms. An diesem Achsstummelpaar ist die Traverse drehbar um die Längsachse des Hilfsarms angeordnet. Das andere Achsstummelpaar ist in der Grundstellung senkrecht zum verbundenen Armbereich des Hilfsarms und zu der Traverse angeordnet und ermöglicht so die Bewegung um die Querachse.

Ein Achsstummelpaar ist drehbar am Hilfsarm und das andere Achsstummelpaar ist drehbar an der Traverse angeordnet.

Am Ende des freien Hilfsarms ist ein Gehäuse angeordnet, wobei vorzugsweise das sich entlang der Querachse erstreckende Achsstummelpaar in zwei Aufnahmen des Gehäuses drehbar angeordnet, insbesondere gelagert ist. Die Traverse durchgreift dabei das Gehäuse. Das Gehäuse weist an seiner Oberseite eine Montageöffnung und an der Front- und Rückseite jeweils ebenfalls eine Montageöffnung auf, wobei diese beiden Montageöffnungen als Aufnahmen für das in Querrichtung orientierte Achsstummelpaar dienen. In den Montageöffnungen können Lagerschalen eingesetzt sein, wobei in den Lagerschalen Köpfe des zugeordneten Achstummelpaares drehbar angeordnet sind.

Das Kreuzstück ist zu Montagezwecken zerlegbar ausgebildet. Das Kreuzstück weist die insgesamt vier Achsstummel und ein Mittelstück auf, an dem die Achsstummel befestigt werden können. Das Mittelstück und die Achsstummel sind insbesondere durch eine Schraubverbindung miteinander verbindbar.

Um eine optimale Positionierbarkeit der Eckgreifer und/oder des Greifhakens zu erreichen, ist der Hauptarm teleskopierbar ausgebildet, und der Hilfsarm ist ebenfalls teleskopierbar ausgebildet. Die Traverse weist zwei Traversenbereiche auf, wobei jeder der beiden der Traversenbereiche teleskopierbar ausgebildet ist. Die Eckgreifer sind ferner um die Längsachse der Traverse schwenkbar.

Um nun die Eckgreifer bzw. den Haken präzise relativ zum Abrollbehälter positionieren zu können, weist das Wechselladerfahrzeug insbesondere ein Sensorsystem mit mindestens einem vorzugsweise optischen Sensor auf. Mit diesem Sensorsystem lässt sich die Position des Abrollbehälters relativ zum Wechselladerfahrzeug erfassen. Mittels des Sensorsystems ist insbesondere eine Bestimmung der Position der Ecken bzw. des Hakens des Abrollbehälters möglich. Es ist denkbar, dass das Wechselladerfahrzeug eine automatisierte Steuerung zum Be- und Entladen der Abrollbehälter aufweist. Hierzu wird zunächst mittels des Sensorsystems die Position des Abrollbehälters und insbesondere der oberen Ecken im Falle eines ISO-Containers oder des Hakens im Fall eines Transportbehälters mit einem Haken bestimmt. Ausgehend davon, wird die Ladearmanordnung vollautomatisch oder teilautomatisch derart angesteuert, dass die Eckgreifer bzw. der Greifhaken den Abrollbehälter entsprechend greifen kann.

Innerhalb der Fahrerkabine kann ein Display angeordnet sein, dass dem Bediener ein Kamerabild oder ein virtuell gerendertes Bild des Containers und der Ladearmanordnung anzeigt. Es ist möglich, dass als Display eine VR-Brille dient (Virtual-Reality-Brille) dient. Das Display erleichtert dem Bediener die Steuerung und/oder die Kontrolle des Ladevorgangs.

Wenn der Abrollbehälter auf das Wechselladerfahrzeug gezogen worden ist, so wird der Abrollbehälter dort mittels eines Twist-Lock-Systems automatisch fixiert.

Die eingangs genannten Nachteile sind daher vermieden, entsprechende Vorteile sind erzielt.

Es gibt nun eine Vielzahl von Möglichkeiten, die Erfindung auszugestalten und weiterzubilden. Hierfür darf zunächst auf die dem Patentanspruch 1 nachgeordneten Patentansprüche verwiesen werden. Im Folgenden wird eine bevorzugte Ausgestaltung der Erfindung anhand der Zeichnung und der dazugehörigen Beschreibung näher erläutert.

In der Zeichnung zeigt:
- Fig. 1: in schematischer Seitenansicht ein Wechselladerfahrzeug mit einer Ladearmanordnung in einer Grundstellung,
- Fig. 2: in einer schematischen Seitenansicht das Wechselladerfahrzeug mit der Ladearmanordnung in einer aufgefahrenen Stellung beim Aufladen eines ISO-Containers,
- Fig. 3: in einer schematischen Seitenansicht das Wechselladerfahrzeug beim Aufladen einer Abrollpritsche, welche von der Ladearmanordnung mittels eines Greifhakens gegriffen ist,
- Fig. 4: in einer schematischen Rückansicht die Ladearmanordnung ohne den Greifhaken,
- Fig. 5: in einer schematischen Seitenansicht die Ladearmanordnung gemäß Fig. 4, sowie
- Fig. 6: in einer schematischen geschnittenen Darstellung ein Kreuzgelenk der Ladearmanordnung, das eine Traverse und einen Hilfsarm drehbar verbindet.

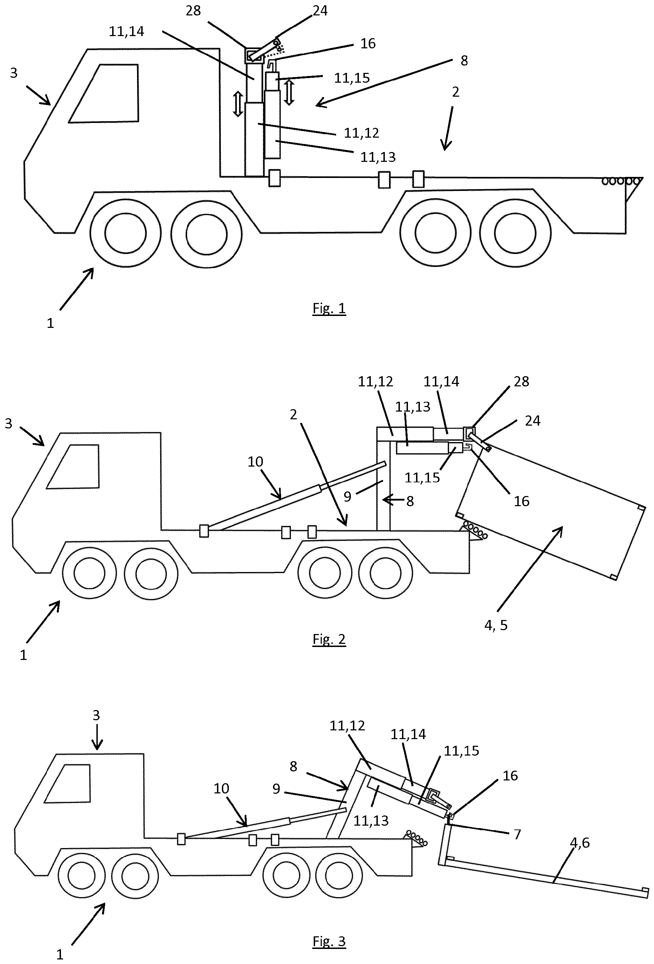

In den Fig. 1 bis 3 ist ein Wechselladerfahrzeug 1 gut zu erkennen. Das Wechselladerfahrzeug 1 weist eine Ladefläche 2 und eine Fahrerkabine 3 auf. Das Wechselladerfahrzeug 1 ist insbesondere für militärische Einsätze ausgebildet. Hierzu kann die Fahrerkabine 3 beispielsweise gepanzert ausgebildet sein. Das Wechselladerfahrzeug 1 ist insbesondere nicht nur für den Einsatz auf einer Straße, sondern auch für ein Gelände geeignet.

Mit dem Wechselladerfahrzeug 1 sind nun unterschiedliche Abrollbehälter 4, wie beispielsweise ein ISO-Container 5 oder ein Transportbehälter 6 mit einem Haken 7 ladbar. Dazu weist das Wechselladerfahrzeug 1 eine Ladearmanordnung 8 auf, die zum Beladen sowohl von ISO-Containern 5 als auch von Transportbehältern 6 mit einem Haken 7 geeignet ist.

Die Ladearmanordnung 8 weist einen Hauptarm 9 auf, wobei der Hauptarm 9 mit seinem einen Ende schwenkbeweglich an der Ladefläche 2, insbesondere an einem Fahrzeugrahmen oder dergleichen angelenkt ist. Zum Schwenken des Hauptarms 9 ist ein Antrieb insbesondere in Form einer hydraulisch bestätigten Schubstange 10 vorhanden. Alternativ kann ein pneumatischer oder motorischer. Antrieb vorgesehen sein. Der Hauptarm 9 ist in seiner Längsrichtung insbesondere teleskopierbar ausgebildet, um verschieden lange Abrollbehälter 4 aufnehmen zu können. An dem anderen Ende des telekopierbaren Teils des Hauptarms 9 ist ein Hilfsarm 11 angeordnet, wobei der Hilfsarm 11 sich im Wesentlichen senkrecht zum Hauptarm 9 erstreckt. Der Hilfsarm 11 ist dabei winkelfest am Hauptarm 9 befestigt. Der Hilfsarm 11 ist insbesondere an einem teleskopierbaren Teil des Hauptarms 9 befestigt. Diese Ausgestaltung kann auch als Schiebehaken bezeichnet werden. Der Hilfsarm 11 kann auch als Schiebearm bezeichnet werden. Es ist denkbar, dass der Hilfsarm 11 als Knickarm ausgebildet ist und schwenkbar am Hauptarm 9 angeordnet ist (nicht dargestellt).

Der Hilfsarm 11 weist nun zwei Greifersysteme auf. Zum einem ist ein Greifersystem zum Greifen von ISO-Containern 5 und zum anderen ist ein Greifersystem zum Greifen von Transportbehältern 6 mit einem Haken 7 vorhanden. Hierdurch kann auf einen Adapter verzichtet werden.

Der Hilfsarm 11 weist hier zwei Außenhülsen 12, 13 auf, in denen jeweils ein verschiebbares Innenteil 14, 15 teleskopierbar angeordnet ist. An dem Ende des zweiten Innenteils 15 ist ein Greifhaken 16 angeordnet. Der Greifhaken 16 ist somit relativ zum Hauptarm ebenfalls in Querrichtung teleskopierbar.

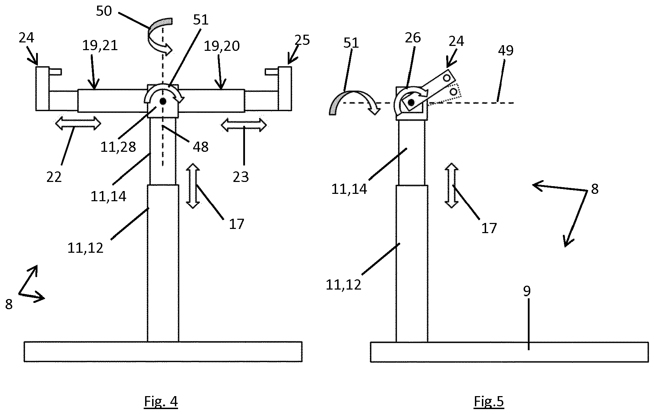

Im Folgenden darf das andere Greifersystem zum Greifen von ISO-Containern näher anhand der Fig. 4 und 5 erläutert werden.

In Fig. 4 und 5 ist die Teleskopierbarkeit des Hilfsarms 11 durch den Pfeil 17 angedeutet. An dem freien Ende des ersten Innenteils 14 ist eine Traverse 19 angeordnet. Die Traverse 19 ist dabei im Wesentlichen in ihrer Mitte am Ende des ersten Innenteils 14 angeordnet. Die Traverse 19 weist einen ersten Traversenbereich 20 und ein zweiten Traversenbereich 21 auf, die jeweils in Fig. 4 in Längsrichtung der Traverse links und rechts über das Innenteil 14 seitlich hinaus ragen. Jeder der beiden Traversenbereiche 20, 21 ist teleskopierbar ausgebildet. Die Teleskopierbarkeit ist durch die Pfeile 22, 23 angedeutet. An den freien Enden der Traversenbereiche 20, 21 sind Eckgreifer 24, 25 angeordnet, die jeweils um die Längsachse der Traverse 19 schwenkbar sind, was durch den Pfeil 26 angedeutet ist. Die jeweiligen Bewegungen der Traversenbereichen 20, 21 bzw. der Eckgreifer 24, 25 erfolgt hydraulisch, pneumatisch oder motorisch.

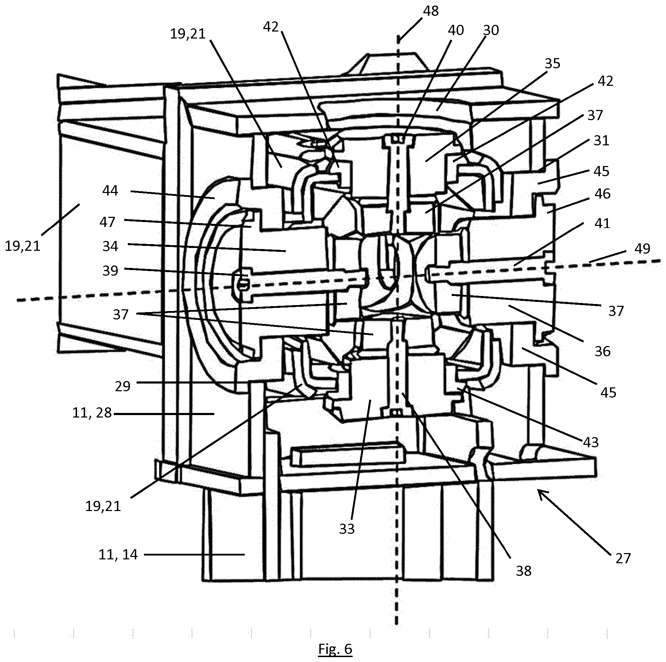

Ein besonderer Vorteil der Ladearmanordnung 8 ist, dass die Traverse 19 relativ zum Hilfsarm 11, nämlich hier insbesondere zum Innenteil 14 um zwei Achsen schwenkbar ist. Dies wird dadurch erreicht, dass die Traverse 19 mit dem Innenteil 14 über ein Kreuzgelenk 27 (vgl. Fig. 6) verbunden ist. In alternativer Ausgestaltung kann anstatt eines Kreuzgelenks 27 beispielsweise ein Kugelgelenk verwendet werden (nicht dargestellt).

An dem Ende des Innenteils 14 ist ein Gehäuse 28 angeordnet, wobei innerhalb des Gehäuses 28 das Kreuzgelenk 27 angeordnet ist. Das Gehäuse 28 weist drei Montageöffnungen 29, 30, 31 auf. Die Montageöffnungen 29 und 31 sind dabei an der Front- und Rückseite (nicht näher bezeichnet) des Gehäuses 28 angeordnet und die Montageöffnung 30 ist an der Oberseite angeordnet. Ferner weist das Gehäuse 28 jeweils zwei Durchgriffsöffnungen auf, so dass die Traverse 19 durch das Gehäuse 28 hindurchreichen kann.

Das Kreuzgelenk 27 weist ein Kreuzstück 32 auf, wobei das Kreuzstück 32 durch vier Achsstummel 33, 34, 35, 36 und ein Mittelstück 37 gebildet ist. Die beiden Achsstummel 33 und 35 und die beiden Achsstumme 34 und 36 sind jeweils fluchtend zueinander angeordnet. Dadurch sind zwei rechtwinklig gekreuzte Achsstummelpaare 33, 35 bzw. 34, 36 gebildet. Die Achsstummel 33, 34, 35, 36 sind mit einem Mittelstück 37 verbunden. Die Achsstummel 33 bis 36 sind insbesondere durch eine Schraubverbindung 38, 39, 40, 41 mit dem Mittelstück 37 verbunden. Die Achsstummel 33 und 35 sind über eine Lagerschale 42, 43 schwenkbeweglich relativ zur Traverse 19 angeordnet. In den Montageöffnungen 29, 31 sind entsprechende Lagerschalen 44, 45 angeordnet, wobei die Lagerschalen 44, 45 mit jeweils einem Kragen (nicht näher bezeichnet) außen am Gehäuse 28 anliegen. Die Lagerschalen 44, 45 bilden dabei eine gestufte Aufnahme, in denen die Köpfe 46, 47 angeordnet sind. Die Köpfe 46, 47 sind weisen dabei einen größeren Durchmesser auf als die Bohrung der Lagerschalen 42 bis 45.

Hierdurch ist die Traverse 19 sowohl um die Längsachse 48 des Hilfsarms 11 als auch um eine Querachse 49 schwenkbar. Die Querachse 49 erstreckt sich dabei quer sowohl zum Hilfsarm 11 als auch quer zur Traverse 19. Die Längsachse 48 und die Querachse 49 stehen senkrecht zueinander.

Durch eine Schwenkung der Traverse 19 um die Längsachse 48 kann ausglichen werden, wenn das Wechselladerfahrzeug 1 und der Abrollbehälter 4 in Form des ISO-Containers 5 winklig zueinander und nicht fluchtend zueinander stehen. Durch ein Schwenken der Traverse 19 um die Querachse 49 kann ausgeglichen werden, wenn der ISO-Container um seine Längsachse gekippt steht, weil er beispielsweise in einen weichen Untergrund eingesunken ist.

Durch diese mögliche Schwenkbarkeit der Traverse 19 um die Längsachse 48 (vgl. Pfeil 50, Fig. 4) und die Querachse 49 (vgl. Pfeil 51, Fig. 4 und 5) kann so auch bei schwierigen Umgebungsverhältnissen beispielsweise beim Einsatz von entsprechenden ISO-Containern 5 in einem Gelände der ISO-Container 5 von der Ladearmanordnung 8 sicher aufgenommen werden.

Ein besonderer Vorteil dieser Ladearmanordnung 8 besteht darin, dass es möglich ist, die ISO-Container 5 und/oder die Transportbehälter 6 mit dem entsprechenden Haken 7 vollautomatisiert aufzuladen und zu entladen.

Es ist weder nötig, dass manuell ein Adapter zum Umrüsten von ISO-Containern 5 auf ein Greifhakensystem eingesetzt werden muss, noch ist es nötig, dass das Wechselladerfahrzeug 1 präzise fluchtend zum ISO-Container 5 ausgerichtet ist oder dass der ISO-Container 5 mit der gleichen Neigung wie das Wechselladerfahrzeug 1 steht.

Die eingangs genannten Nachteile sind daher vermieden und entsprechende Vorteile sind erzielt.

### Bezugszeichenliste:

- 1: Wechselladerfahrzeug
- 2: Ladefläche
- 3: Fahrerkabine
- 4: Abrollbehälter
- 5: ISO-Container
- 6: Transportbehälter / Abrollpritsche
- 7: Haken
- 8: Ladearmanordnung
- 9: Hauptarm
- 10: Schubstange
- 11: Hilfsarm
- 12: Außenhülse
- 13: Außenhülse
- 14: Innenteil
- 15: Innenteil
- 16: Greifhaken
- 17: Pfeil
- 18: Pfeil
- 19: Traverse
- 20: Traversenbereich
- 21: Traversenbereich
- 22: Pfeil
- 23: Pfeil
- 24: Eckgreifer
- 25: Eckgreifer
- 26: Pfeil
- 27: Kreuzgelenk
- 28: Gehäuse
- 29: Montageöffnung
- 30: Montageöffnung
- 31: Montageöffnung
- 32: Kreuzstück
- 33: Achsstummel
- 34: Achsstummel
- 35: Achsstummel
- 36: Achsstummel
- 37: Mittelstück
- 38: Schraubverbindung
- 39: Schraubverbindung
- 40: Schraubverbindung
- 41: Schraubverbindung
- 42: Lagerschale
- 43: Lagerschale
- 44: Lagerschale
- 45: Lagerschale
- 46: Kopf des Achsstummels
- 47: Kopf des Achsstummels
- 48: Längsachse
- 49: Querachse
- 50: Pfeil
- 51: Pfeil

## Patentansprüche

1. Ladearmanordnung (8) für ein Wechselladerfahrzeug (1) mit einem Hauptarm (9) und mit einem Hilfsarm (11), wobei die Ladearmanordnung (8) zum Entladen und Beladen von ISO-Containern (5) und zum Entladen und Beladen von Transportbehältern (6) mit einem Haken (7) ausgebildet ist, **dadurch gekennzeichnet, dass** an dem Hilfsarm (11) teleskopierbar eine Traverse (19) mit zwei Eckgreifern (24, 25) und ferner separat teleskopierbar ein Greifhaken (16) angeordnet sind.

2. Ladearmanordnung nach Anspruch 1, **dadurch gekennzeichnet, dass** der Hilfsarm (11) zwei Außenhülsen (12, 13) aufweist, wobei die Außenhülsen (12, 13) eine am Hauptarm (9) befestigte Baueinheit bilden, wobei an der einen Außenhülse (12) ein Innenteil (14) mit der Traverse (19) und den entsprechenden Eckgreifern (24, 25) zum Greifen von ISO-Containern (5) und an einem anderen in der Außenhülse (13) geführten Innenteil (15) der Greifhaken (16) angeordnet ist.

3. Ladearmanordnung nach Anspruch 1 oder 2, **dadurch gekennzeichnet, dass** die Traverse (19) relativ zum Hilfsarm (11) um zwei Achsen (48, 49) schwenkbar ist.

4. Ladearmanordnung nach dem vorstehenden Anspruch, **dadurch gekennzeichnet, dass** die Traverse (19) zum einen um eine Querachse (49) schwenkbar ist, wobei die Querachse (49) sich quer, insbesondere senkrecht zur Längsrichtung der Traverse (19) und quer, insbesondere senkrecht zur Längsachse (48) des Hilfsarms (11) erstreckt, wobei zum anderen die Traverse (19) um die Längsachse (48) des Hilfsarms (11) schwenkbar ist.

5. Ladearmanordnung nach einem der vorstehenden Ansprüche 3 oder 4, **dadurch gekennzeichnet, dass** die Traverse (19) und der Hilfsarm (11) über ein Kreuzgelenk (27) verbunden sind, wobei das Kreuzgelenk (27) ein Kreuzstück (32) mit zwei Achsstummelpaaren (34, 36 und 33, 35) aufweist, wobei der Hilfsarm (11) mit einem Achsstummelpaar (34, 36) drehbar verbunden ist und die Traverse (19) mit dem anderen Achsstummelpaar (33, 35) drehbar verbunden ist.

6. Ladearmanordnung nach einem der vorstehenden Ansprüche 3 bis 5, **dadurch gekennzeichnet, dass** der Hilfsarm (11) ein Gehäuse (28) aufweist, wobei die Traverse (19) das Gehäuse (28) durchgreift, wobei ein Achsstummelpaar (34, 36) drehbar am Gehäuse (28) angeordnet ist.

7. Ladearmanordnung nach dem vorstehenden Anspruch, **dadurch gekennzeichnet, dass** das drehbar am Gehäuse (28) angreifende Achsstummelpaar (34, 36) sich senkrecht zur Traverse (19) und senkrecht zur Längsrichtung des Hilfsarms (11) erstreckt.

8. Ladearmanordnung nach einem der vorstehenden Ansprüche, **dadurch gekennzeichnet, dass** der Hauptarm (9) teleskopierbar ausgebildet ist.

9. Ladearmordnung nach einem der vorstehenden Ansprüche, **dadurch gekennzeichnet, dass** der Hilfsarm (11) teleskopierbar ausgebildet ist.

10. Ladearmanordnung nach einem der vorstehenden Ansprüche, **dadurch gekennzeichnet, dass** die Traverse (19) zwei Traversenbereiche (20, 21) aufweist, wobei jeder der beiden Traversenbereiche (20, 21) teleskopierbar ausgebildet ist.

11. Ladearmanordnung nach einem der vorstehenden Ansprüche, **dadurch gekennzeichnet, dass** die Eckgreifer (24, 25) um die Längsachse der Traverse (19) schwenkbar sind.

12. Wechselladerfahrzeug (1) mit einer Ladearmanordnung (8) nach einem der vorstehenden Ansprüche.

## Claims

1. Loading arm assembly (8) for a load-handling vehicle (1), having a main arm (9) and having an auxiliary arm (11), wherein the loading arm assembly (8) is configured for unloading and loading ISO containers (5) and for unloading and loading transportation containers (6) having a hook (7), **characterized in that** a crossbeam (19) having two corner grippers (24, 25) and furthermore, separately therefrom, a telescopic gripping hook (16) is disposed on the auxiliary arm (11).

2. Loading arm assembly according to Claim 1, **characterized in that** the auxiliary arm (11) has two outer sleeves (12, 13), wherein the outer sleeves (12, 13) form a functional unit that is fastened to the main arm (9), wherein an internal part (14) having the crossbeam (19) and the respective corner grippers (24, 25) for gripping ISO containers (5) is disposed on the one outer sleeve (12), and the gripping hook (16) is disposed on another internal part (15) that is guided in the outer sleeve (13).

3. Loading arm assembly according to Claim 1 or 2, **characterized in that** the crossbeam (19) is pivotable relative to the auxiliary arm (11) about two axes (48, 49).

4. Loading arm assembly according to the preceding claim, **characterized in that** the crossbeam (19) is pivotable about a transverse axis (49), on the one hand, wherein the transverse axis (49) extends transversely, in particular perpendicularly, to the longitudinal axis of the crossbeam (19) and transversely, in particular perpendicularly, to the longitudinal axis (48) of the auxiliary arm (11), wherein the crossbeam (19) is pivotable about the longitudinal axis (48) of the auxiliary arm (11), on the other hand.

5. Loading arm assembly according to either of the preceding Claims 3 or 4, **characterized in that** the crossbeam (19) and the auxiliary arm (11) are connected by way of a universal joint (27), wherein the universal joint (27) has a crosspiece (32) having two axle stump pairs (34, 36, and 33, 35), wherein the auxiliary arm (11) is rotatably connected to one axle stump pair (34, 36), and the crossbeam (19) is rotatably connected to the other axle stump pair (33, 35).

6. Loading arm assembly according to one of the preceding Claims 3 to 5, **characterized in that** the auxiliary arm (11) has a housing (28), wherein the crossbeam (19) engages through the housing, wherein one axle stump pair (34, 36) is rotatably disposed on the housing (28).

7. Loading arm assembly according to the preceding claim, **characterized in that** the axle stump pair (34, 36) that rotatably engages on the housing (28) extends perpendicularly to the crossbeam (19) and perpendicularly to the longitudinal direction of the auxiliary arm (11).

8. Loading arm assembly according to one of the preceding claims, **characterized in that** the main arm (9) is configured so as to be telescopic.

9. Loading arm assembly according to one of the preceding claims, **characterized in that** the auxiliary arm (11) is configured so as to be telescopic.

10. Loading arm assembly according to one of the preceding claims, **characterized in that** the crossbeam (19) has two crossbeam regions (20, 21), wherein each of the two crossbeam regions (20, 21) is configured so as to be telescopic.

11. Loading arm assembly according to one of the preceding claims, **characterized in that** the corner grippers (24, 25) are pivotable about the longitudinal axis of the crossbeam (19).

12. Load-handling vehicle (1) having a loading arm assembly (8) according to one of the preceding claims.

## Revendications

1. Agencement de bras de chargement (8) pour un véhicule à superstructure interchangeable (1), comprenant un bras principal (9) et comprenant un bras auxiliaire (11), l'agencement de bras de chargement (8) étant configuré pour le déchargement et le chargement de conteneurs ISO (5) et pour le déchargement et le chargement de contenants de transport (6) avec un crochet (7), **caractérisé en ce que,** sur le bras auxiliaire (11), sont agencés de manière télescopique une traverse (19) comprenant deux pinces d'angle (24, 25) et, en outre, de manière télescopique séparée, un crochet de préhension (16) .

2. Agencement de bras de chargement selon la revendication 1, **caractérisé en ce que** le bras auxiliaire (11) présente deux manchons extérieurs (12, 13), les manchons extérieurs (12, 13) formant une unité modulaire fixée au bras principal (9), une partie intérieure (14) comprenant la traverse (19) et les pinces d'angle correspondantes (24, 25) pour la préhension de conteneurs ISO (5) étant agencée sur l'un des manchons extérieurs (12) et le crochet de préhension (16) étant agencé sur une autre partie intérieure (15) guidée dans le manchon extérieur (13).

3. Agencement de bras de chargement selon la revendication 1 ou 2, **caractérisé en ce que** la traverse (19) peut pivoter autour de deux axes (48, 49) par rapport au bras auxiliaire (11).

4. Agencement de bras de chargement selon la revendication précédente, **caractérisé en ce que** la traverse (19) peut pivoter d'une part autour d'un axe transversal (49), l'axe transversal (49) s'étendant transversalement, notamment perpendiculairement à la direction longitudinale de la traverse (19) et transversalement, notamment perpendiculairement à l'axe longitudinal (48) du bras auxiliaire (11), la traverse (19) pouvant d'autre part pivoter autour de l'axe longitudinal (48) du bras auxiliaire (11).

5. Agencement de bras de chargement selon l'une quelconque des revendications 3 ou 4 précédentes, **caractérisé en ce que** la traverse (19) et le bras auxiliaire (11) sont reliés par l'intermédiaire d'une articulation en croix (27), l'articulation en croix (27) présentant une pièce en croix (32) comprenant deux paires de bouts d'arbre (34, 36 et 33, 35), le bras auxiliaire (11) étant relié de manière rotative à une paire de bouts d'arbre (34, 36) et la traverse (19) étant reliée de manière rotative à l'autre paire de bouts d'arbre (33, 35).

6. Agencement de bras de chargement selon l'une quelconque des revendications 3 à 5 précédentes, **caractérisé en ce que** le bras auxiliaire (11) présente un boîtier (28), la traverse (19) traversant le boîtier (28), une paire de bouts d'arbre (34, 36) étant agencée de manière rotative sur le boîtier (28).

7. Agencement de bras de chargement selon la revendication précédente, **caractérisé en ce que** la paire de bouts d'arbre (34, 36) agissant de manière rotative sur le boîtier (28) s'étend perpendiculairement à la traverse (19) et perpendiculairement à la direction longitudinale du bras auxiliaire (11).

8. Agencement de bras de chargement selon l'une quelconque des revendications précédentes, **caractérisé en ce que** le bras principal (9) est configuré sous forme télescopique.

9. Agencement de bras de chargement selon l'une quelconque des revendications précédentes, **caractérisé en ce que** le bras auxiliaire (11) est configuré sous forme télescopique.

10. Agencement de bras de chargement selon l'une quelconque des revendications précédentes, **caractérisé en ce que** la traverse (19) présente deux zones de traverse (20, 21), chacune des deux zones de traverse (20, 21) étant configurée sous forme télescopique.

11. Agencement de bras de chargement selon l'une quelconque des revendications précédentes, **caractérisé en ce que** les pinces d'angle (24, 25) peuvent pivoter autour de l'axe longitudinal de la traverse (19).

12. Véhicule à superstructure interchangeable (1) comprenant un agencement de bras de chargement (8) selon l'une quelconque des revendications précédentes.
